# EUROPÄISCHE PATENTSCHRIFT

(11) **EP 2 898 513 B1**
(45) Veröffentlichungstag und Bekanntmachung des Hinweises auf die Patenterteilung: **11.01.2017**
(21) Anmeldenummer: 13753827.8
(22) Anmeldetag: 09.08.2013
(51) Int. Cl.: G21C 7/12, G21C 13/067

(54) **VORRICHTUNG ZUM VERSCHLIESSEN EINES ANTRIEBSGEHÄUSEROHRS**
DEVICE FOR CLOSING A DRIVE CASING PIPE
DISPOSITIF POUR L'OBTURATION D'UN TUBE DE CARTER D'ENTRAÎNEMENT

(30) Priorität: 19.09.2012 DE 102012216833
(43) Veröffentlichungstag der Anmeldung: 29.07.2015
(73) Patentinhaber: AREVA GmbH, 91052 Erlangen (DE)
(72) Erfinder: MÜLLER, Erhard, 91362 Pretzfeldt (DE); HUPRICH, Paul, 91077 Neunkirchen am Brand (DE); BROCKMÖLLER-MEINERS, Arne, 24635 Rickling (DE)
(74) Vertreter: Schlögl, Markus
(86) Internationale Anmeldenummer: PCT/EP2013/066721
(87) Internationale Veröffentlichungsnummer: WO 2014/044468

(56) Entgegenhaltungen:
- GB-A- 722 040
- GB-A- 190 714 606
- US-A1- 2006 138 139

## Beschreibung

Die Erfindung betrifft eine Vorrichtung zum Verschließen eines Antriebsgehäuserohrs. Diese umfasst einen Verschlusstopfen, der zum Verschließen einer nach oben ausmündenden Rohröffnung des einen Steuerstabantrieb eines Siedewasserreaktors aufnehmenden Rohres, des Antriebsgehäuserohrs, dient. Steuerstäbe dienen zur Steuerung bzw. Regelung der in den Brennelementen des Reaktordruckbehälters ablaufenden Kettenreaktionen, wobei sie, je nachdem wie weit sie in den Reaktordruckbehälter eingefahren sind, mehr oder weniger Neutronen, die bei der Kettenreaktion freigesetzt werden, absorbieren.

Bei Siedewasserreaktoren werden die Steuerstäbe von unten her in den eine Vielzahl von Brennelementen umfassenden Reaktorkern eingefahren. Die zum Einfahren der Steuerstäbe erforderlichen Motoren befinden sich in einem unterhalb des Reaktordruckbehälters vorhandenen Raum, wobei auf bekannte Weise ein etwa stangenförmiger Steuerstabträger in dem Antriebsgehäuserohr, das mit seinem oberen Ende durch den Boden des Reaktordruckbehälters hindurchgeführt ist, vertikal beweglich ist. Die hier in Rede stehende Antriebstechnik ist bekannt, so dass auf nähere Angaben hierzu verzichtet werden kann.

Werden beispielsweise im Falle des Rückbaus eines Kraftwerks Brennelemente, Steuerstäbe und Steuerstabführungsrohre, in welchen die Steuerstäbe axial beweglich geführt sind, aus dem Reaktordruckbehälter entfernt, ist das Antriebsgehäuserohr nach oben hin offen, d.h. es mündet mit einer Rohröffnung in den Innenraum des Reaktordruckbehälters. Um im Falle einer Demontage oder Reparatur der sich unterhalb des Reaktordruckbehälters befindlichen Antriebssysteme eine Leckage von Primärkühlmittel zu verhindern, ist ein Verschluss der genannten Rohröffnung erforderlich.

Aufgabe der Erfindung ist es, eine Vorrichtung vorzuschlagen, mit der ein Antriebsgehäuserohr auf einfache und zuverlässige Weise abgedichtet und die Abdichtung wieder rückgängig gemacht werden kann.

Bekannte Vorrichtungen zum Verschluss von Rohröffnungen zeigen beispielsweise GB14606 oder US2006/138139.

Diese Aufgabe wird durch eine Vorrichtung nach Anspruch 1 gelöst. Die Vorrichtung umfasst einen Verschlussstopfen mit einem nach unten offenen Stopfengehäuse und einen axial beweglich innerhalb des Stopfengehäuses geführten Dichtelement. Das Dichtelement weist eine zur dichtenden Anlage an eine ringförmige, die obere Rohröffnung des Antriebsgehäuserohrs umgrenzenden Gegenfläche dienende Dichtfläche auf. Weiterhin umfasst die Vorrichtung ein Verriegelungselement, welches zur Fixierung des Stopfengehäuses an dem Antriebsgehäuserohr dient. Schließlich ist noch eine Feder vorhanden, welche sich mit ihrem oberen Ende an dem Stopfengehäuse und mit ihrem unteren Ende am Dichtelement abstützt und dabei dieses in einer unteren Endlage hält bzw. in Richtung dieser Endlage mit einer Federkraft beaufschlagt.

Eine derartige Ausgestaltung ermöglicht es, dass der Verschlussstopfen mit einer vertikal nach unten gerichteten Zuführbewegung auf das obere Rohrende des Antriebsgehäuserohrs aufgesetzt und das Stopfengehäuse am Rohrende fixiert werden kann. Aufgrund der federnden Lagerung des Dichtelements kann das Stopfengehäuse, nachdem das Dichtelement mit seiner Dichtfläche an einer Gegenfläche des Antriebsgehäuserohrs im Sinne einer Dichtpaarung anliegt, noch weiter vertikal nach unten verfahren werden, bis das Dichtelement mit einer vorgegebenen Kraft an die Gegenfläche gedrückt wird. Dann kann das Verriegelungselement aktiviert und der Verschlussstopfen axial am Antriebsgehäuserohr fixiert werden.

Für die Art und Weise, wie das Verriegelungselement in eine in das Rohrende fixierende Stellung gebracht werden kann, sind vielfältige technische Realisierungsmöglichkeiten denkbar.

Erfindungsgemäss ist das Verriegelungselement jedoch so ausgestaltet, dass es bezüglich der Mittellängsachse des Verschlussstopfens drehbar am Stopfengehäuse gelagert ist und zwar zwischen einer Verriegelungsstellung, in der es axial wirksam am Rohrende fixiert ist und einer Freigabestellung, in der die Axialfixierung aufgehoben ist. Wie weiter unten noch ausgeführt ist, ermöglicht die drehbare Lagerung des Verriegelungselements eine auch von großer Entfernung aus durchzuführende zuverlässige Verriegelung des Verschlussstopfens in seiner Endstellung bzw. Montageposition. Außerdem lässt sich die Verriegelung durch Zurückdrehen des Verriegelungselements in seine Freigabestellung die Fixierung des Verschlussstopfens wieder aufheben, so dass dieser wieder vom Antriebsgehäuserohr entfernt werden kann.

Auf weitere Ausgestaltungen und Vorteile der Erfindung wird in der nun folgenden Beschreibung eingegangen, welche auf die beigefügten Zeichnungen Bezug nimmt. Es zeigen:
Fig. 1 einen Vertikalschnitt durch einen Bodenbereich eines Reaktordruckbehälters, durch den ein Antriebsgehäuserohr mit seinem oberen Ende hindurchgeführt ist,
Fig. 2 eine perspektivische Ansicht eines Verschlussstopfens,
Fig. 3 einen Längsschnitt entsprechend Linie III - III in Fig. 4,
Fig. 4 eine Draufsicht auf die Oberseite des Verschlussstopfens in Richtung des Pfeils IV in Fig. 2,
Fig. 5 eine Seitenansicht eines Teilgehäuses des Stopfengehäuses in Richtung des Pfeiles V in Fig. 6,
Fig. 6 eine Draufsicht auf die Unterseitseite des Teilgehäuses in Richtung des Pfeiles VI in Fig. 5,
Fig. 7 einen Schnitt entsprechend Linie VII-VII in Fig. 5,
Fig. 8 eine perspektivische Darstellung eines Teilgehäuses,
Fig. 9 ein Verriegelungselement in perspektivischer Darstellung,
Fig. 10 eine Draufsicht auf das Verriegelungselement von Fig. 9,
Fig. 11 das obere Rohrende eines Antriebsgehäuserohrs in Längsschnittdarstellung,

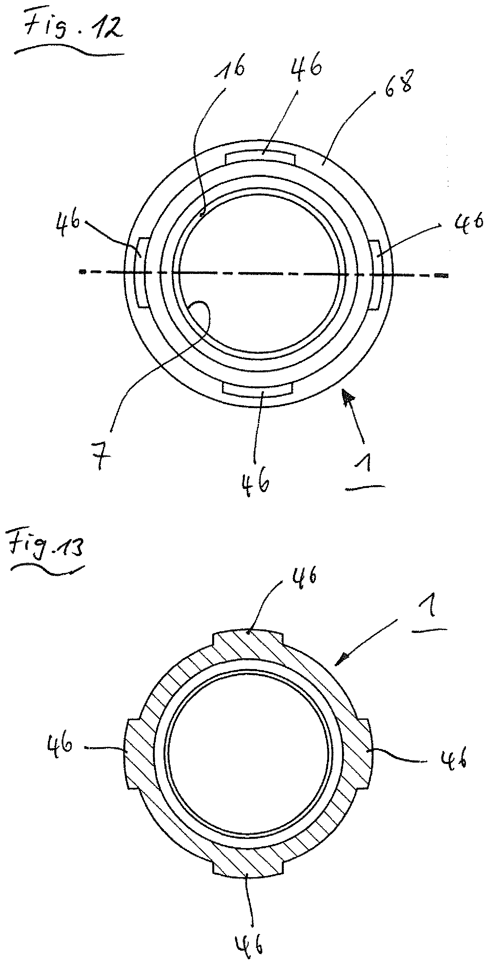

Fig. 12 eine Draufsicht auf das Antriebsgehäuserohr in Richtung des Pfeiles XII in Fig. 11,
Fig. 13 einen Querschnitt entsprechend Linie XIII-XIII in Fig. 11,
Fig. 14 eine schematische Darstellung des unteren Endes eines zum hantieren eines Verschlussstopfens dienenden Werkzeugs.

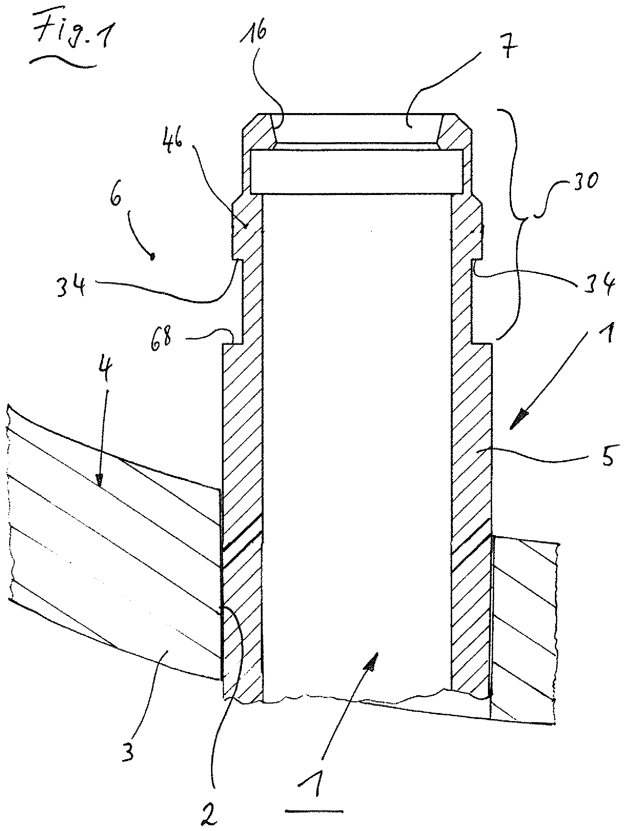

Eine Vorrichtung der erfindungsgemäßen Art, welche neben einem Verschlussstopfen auch ein zu dessen Handhabung dienendes Werkzeug umfasst, dient zum Verschließen eines Antriebsgehäuserohrs 1, welches, wie in Fig. 1 schematisch gezeigt, eine Öffnung 2 im Boden 3 eines Reaktordruckbehälters 4 durchgreift. Das Antriebsgehäuserohr 1 steht dabei mit seinem oberen Endabschnitt 5 in den Innenraum 6 des Reaktordruckbehälters hinein. Mit der in Rede stehenden Vorrichtung wird die obere Rohröffnung 7 des Antriebsgehäuserohrs 1 verschlossen.

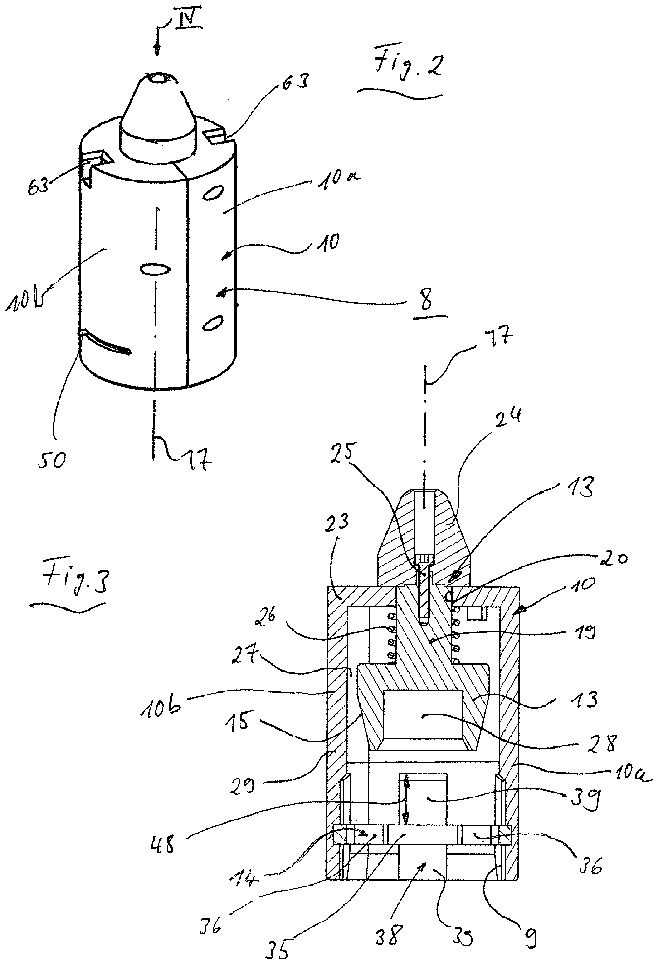

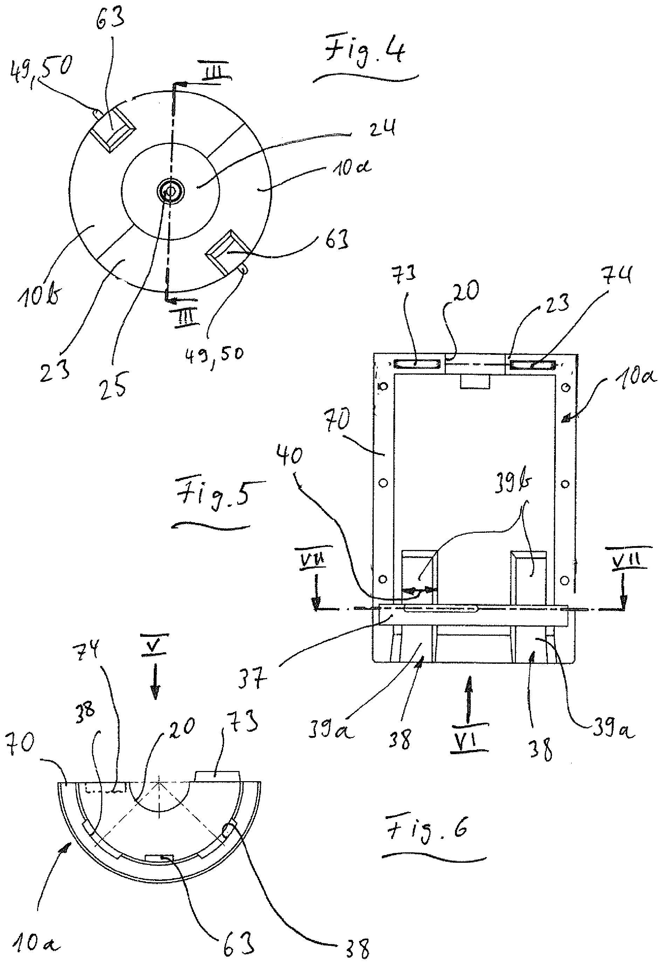

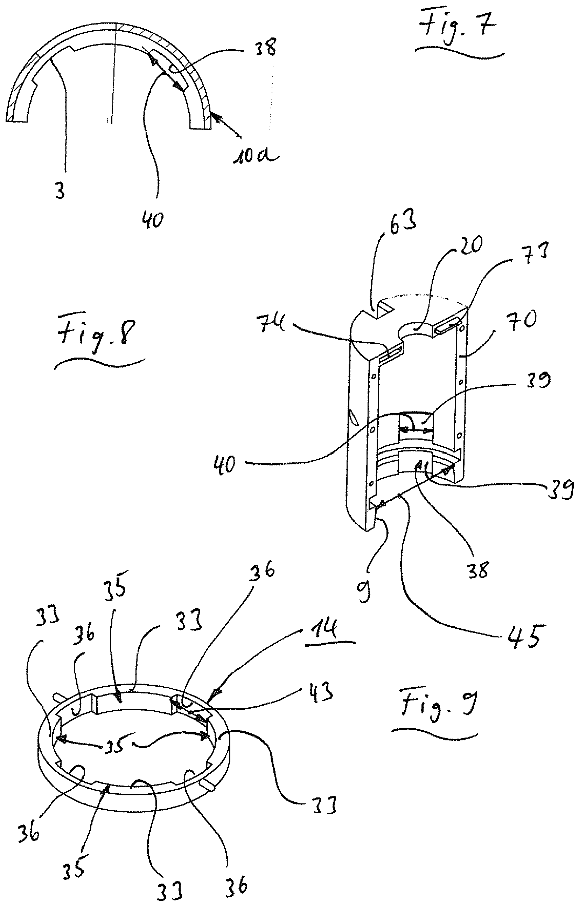

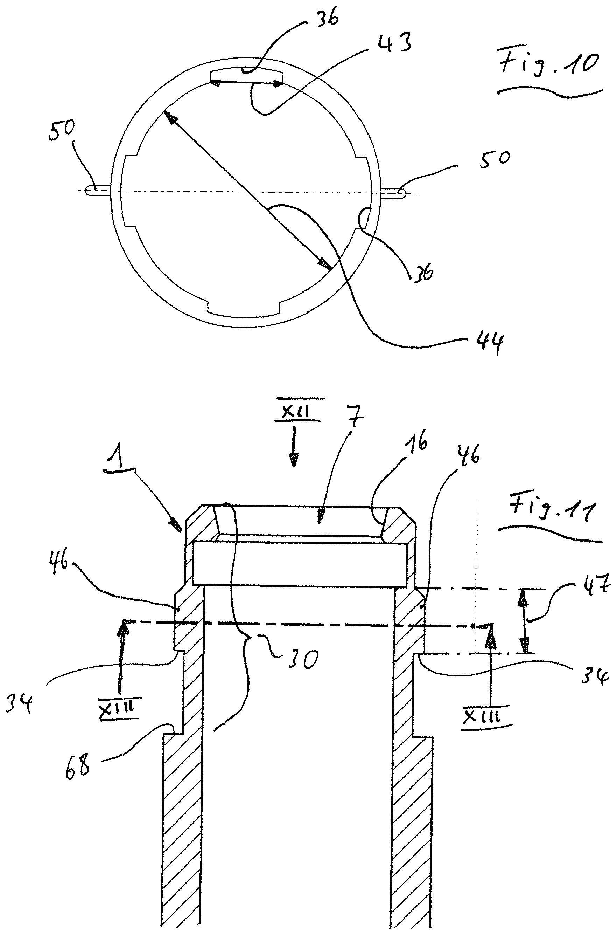

Der dazu dienende Verschlussstopfen 8, welcher in Fig. 2 bis Fig. 10 gezeigt ist, umfasst ein nach unten offenes, also eine unterseitige Öffnung 9 aufweisendes Stopfengehäuse 10, ein axial beweglich innerhalb des Stopfengehäuses 10 geführtes Dichtelement 13 sowie ein Verriegelungselement 14. Das Dichtelement 13 weist eine Dichtfläche 15 auf, die so gestaltet ist, dass sie dichtend an einer Gegenfläche 16 des Rohrendes 5, welche die Rohröffnung 7 umgrenzt, anliegen kann. Die Gegenfläche 7 ist beispielsweise eine sich nach oben erweiternde Konusfläche. Dementsprechend ist die Dichtfläche 15 als eine sich nach unten verjüngende Konusfläche ausgebildet. Das Dichtelement 13 ist bezüglich der Mittellängsachse 17 des Verschlussstopfens 8 beweglich am Stopfengehäuse 10 gelagert und koaxial zur Mittellängsachse 17 ausgerichtet. An der Oberseite des etwa als Kegelstumpf ausgebildeten Dichtelements 13 ist ein sich nach oben weg erstreckender, koaxial zur Mittellängsachse 17 ausgerichteter Führungszapfen 19 angeordnet. Dessen oberes Ende ist durch eine Öffnung 20 in einer oberen, sich quer zur Mittellängsachse 17 erstreckenden Wand 23 mit axialer Beweglichkeit hindurch geführt. Die obere Stirnseite des Führungszapfens 19 ist mit einem gegenüber dessen Durchmesser verbreiteten Kopf 24, der an der Oberseite der Wand 23 des Stopfengehäuses 10 anliegt, z.B. mit Hilfe einer Schraube 25 verbunden. Innerhalb des Stopfengehäuses 10 ist eine beispielsweise als Schraubendruckfeder ausgebildete Feder 26 angeordnet, wobei diese den Führungszapfen koaxial umgreift und sich mit ihrem oberen Ende am Stopfengehäuse 10, nämlich an dessen Wand 23, und mit ihrem unteren Ende an der Oberseite des Dichtelements 13 abstützt. Das Dichtelement ist auf diese Weise in eine untere Endlage vorgespannt (Fig.3). Das Dichtelement 13, das eine kreisrunde Querschnittsform aufweist, ist in Radialrichtung bzw. in einer sich quer zur Mittellängsachse 17 erstreckenden Richtung so bemessen, dass zwischen ihm und der Innenwandung des Stopfengehäuses 10 ein Ringspalt 27 vorhanden ist. Das Dichtelement 13 weist weiterhin einen sich nach unten öffnenden zentralen Hohlraum 28 auf. In Fällen, in denen innerhalb des Antriebsgehäuserohrs 1 noch ein Teil des Antriebs vorhanden ist, kann ein bis an den Bereich der Gegenfläche 16 heranreichender oberer Abschnitt des Antriebsteils von dem Hohlraum 28 aufgenommen werden, so dass das Dichtelement 13 nicht an dem Antriebsteil anstößt und dadurch eine dichtende Anlage der Dichtfläche 15 an der Gegenfläche 16 verhindert wäre. Das Stopfengehäuse 10 weist eine zylindrische Seitenwand 29 auf, wobei der von der Seitenwand 29 umgrenzte Innenraums quer zur Mittellängsachse 17 derart bemessen ist, dass das Stopfengehäuse 10 auf den oberen Rohrabschnitt 5 bzw. auf den sich an die Rohröffnung 7 nach unten anschließenden Rohrabschnitt 30 des Antriebsgehäuserohrs 1 behinderungsfrei aufgesteckt werden kann.

Die axiale Fixierung des Verschlussstopfens am oberen Endabschnitt 5 erfolgt mit Hilfe des Verriegelungselements 14. Dieses ist bezüglich der Mittellängsachse 17 zwischen einer Verriegelungsstellung, in der es axial wirksam am Antriebsgehäuserohr 1 fixiert ist und einer Freigabestellung, in der die Axialfixierung aufgehoben ist, drehbar am Stopfengehäuse 10 gelagert, wobei die Mittellängsachse 17 die Drehachse ist. Das Verriegelungselement 14 weist weiterhin wenigstens eine radial nach innen vorstehende und nach oben weisende Anschlagfläche 33 auf, welche zum Hintergreifen einer nach unten weisenden Gegenfläche 34 am oberen Endabschnitt 5 bzw. am Rohrabschnitt 30 dient. Genauer gesagt ist das Verriegelungselement 14 ein Ring mit insgesamt vier, sich jeweils paarweise diametral gegenüberliegende Anschlagflächen 33, wobei diese einen Teil der Oberseite von radial nach innen vorstehenden Ringsegmenten 35 bilden. Zwischen zwei sich in Umfangsrichtung benachbarten Ringsegmenten 35 ist jeweils eine Ausnehmung 36 vorhanden.

Zur drehbaren Lagerung am Stopfengehäuse liegt das ringförmige Verriegelungselement 14 in einer in der Innenwandung des Stopfengehäuses 10 vorhandenen Ringnut 37 ein. In der Innenwandung des Stopfengehäuses 10 sind außerdem sich in Axialrichtung bzw. in Richtung der Mittellängsachse 17 erstreckende Ausnehmungen 38 vorhanden. Die Ausnehmungen 38 erstrecken sich mit Teilbereichen 39a, 39b nach oben bzw. nach unten von der Ringnut 37 weg. Die Breite 40 der Ausnehmungen 39 entspricht der Breite 43 der am Verriegelungselement 14 vorhandenen Ausnehmungen 36. Die einander zugewandten Innenseiten der Ringsegmente 35 verlaufen auf einer Zylinderfläche (in den Abbildungen nicht dargestellt) deren Durchmesser 44 dem Durchmesser 45 der Innenwandung des Stopfengehäuses 10 entspricht, wobei letzterer in einem sich unmittelbar nach oben und unten an die Ringnut 37 anschließenden Wandungsbereich der Seitenwand 29 des Stopfengehäuses gemessen ist.

Das Verriegelungselement 14 ist drehbar in der Ringnut 37 gehalten. In einer ersten Drehstellung, welche der oben genannten Freigabestellung entspricht, sind die Ausnehmungen 36 deckungsgleich mit den Ausnehmungen 38 des Stopfengehäuses. In der Verriegelungsstellung (Fig. 3) ist das Verriegelungselement 14 gegenüber dem Stopfengehäuse 10 so verdreht, dass die Ringsegmente 35 im Bereich der Ausnehmungen 38 des Stopfengehäuses 10 angeordnet sind. In dieser Stellung hintergreifen bzw. überlappen die Ringsegmente 35 mit ihrer jeweils nach oben weisenden Anschlagfläche 33 die Gegenflächen 34 am Antriebsgehäuserohr 1. Die Gegenflächen 34 sind die unteren Stirnseiten von sich in Richtung der Mittellängsachse 17 erstreckenden Rippen 46, die am Außenumfang des Rohrabschnitts 30 radial nach außen vorstehen und in Umfangsrichtung entsprechend den Ausnehmungen 36 des Verriegelungselements 14 beabstandet sind. Die Länge 47 der Rippen 46 entspricht der Länge 48 der sich von der Ringnut 37 nach oben weg erstreckenden Bereiche 39b der Ausnehmungen 38 des Stopfengehäuses 10. In der Freigabestellung des Verriegelungselements 14 kann somit der Verschlussstopfen 8 auf das Antriebsgehäuse 1 bzw. auf dessen Rohrabschnitt 30 aufgeschoben werden, wobei die Rippen 46 in die komplementär ausgestalteten Ausnehmungen 38 an der Innenwandung des Stopfengehäuses 10 eingreifen. Wenn der Verschlussstopfen seine Endstellung am Antriebsgehäuserohr 1 erreicht hat, befinden sich die Rippen 46 vollständig innerhalb der oberen Bereiche 39b der Ausnehmungen 38, ragen somit nicht in die Ringnut 37 hinein, sodass das Verriegelungselement mit seinen radial nach innen vorstehenden Ringsegmenten 35 unter die Gegenflächen 34 der Rippen 46 bewegt werden kann.

Um das Verriegelungselement 14 in seine verschiedenen Stellungen verfahren zu können, ist wenigstens ein mit einem Überstand 49 aus dem Außenumfang des Stopfengehäuses 10 vorstehendes Drehbetätigungselement 50 vorhanden. Bei dem zeichnerisch dargestellten Ausführungsbeispiel sind zwei Drehbetätigungselemente 50 vorhanden, die an sich diametral gegenüberliegenden Stellen an der Außenseite des ringförmigen Verriegelungselements 14 angeordnet sind. Die Drehbetätigungselemente 50 ragen durch ein sich in Umfangsrichtung des Stopfengehäuses 10 erstreckendes, dessen Seitenwand 29 durchgreifendes Langloch 53 hindurch. Das Langloch 53 weist eine Bogenlänge auf, welche dem Drehverstellweg des Verriegelungselements 14 entspricht.

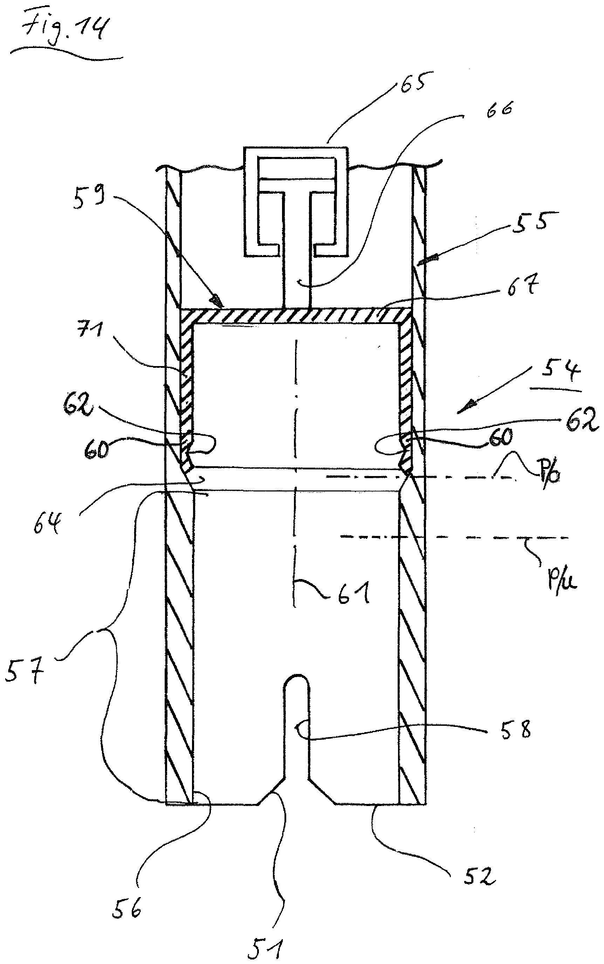

Die Drehbetätigung des Verriegelungselements erfolgt mit Hilfe eines Werkzeugs 54, welches an einem in einem Kraftwerk üblichen vertikal und horizontal verfahrbaren Mast (nicht gezeigt) fixierbar und mit diesem axial verfahrbar ist. Das Werkzeug 54 umfasst ein eine untere Öffnung 56 aufweisendes Montagerohr 55. Ein sich an die untere Öffnung 56 nach oben anschließender Rohrabschnitt bildet eine einen kreisrunden Innenquerschnitt aufweisende Aufnahme 57 für den Verschlussstopfen 8. Außerdem umfasst der genannte Rohrabschnitt ein Koppelelement 58, welches zur Drehbewegung des Verriegelungselements 14 mit einem Drehbetätigungselement 50 zusammenwirkt. Bei dem in Figur 14 dargestellten Ausführungsbeispiel eines Werkzeugs 54 ist das Koppelelement 58 ein sich in Axialrichtung erstreckender, in die untere Stirnseite 52 des Montagerohrs 55 ausmündender Schlitz in der Innenwandung der Aufnahme 57, wobei dieser sich radial nach außen in die Rohrwand des Montagerohrs 55 hinein erstreckt und diese auch durchdringen kann. Der Übergang zwischen der Stirnseite 52 und dem schlitzförmigen Koppelelement 58 ist in Form einer Einführschräge 51 ausgebildet. Bei der Anbringung eines Stopfens an dem Antriebsgehäuserohr 1 ragt das Drehbetätigungselement 50 des Verriegelungselements 14 in das als Schlitz ausgebildete Koppelelement 58 hinein oder durchsetzt dieses.

Zur axialen Fixierung des Verschlussstopfens 8 innerhalb des Montagerohrs 55 ist oberhalb des Koppelelements 58 ein Greifer 59 zwischen einer oberen Axialposition P/o und einer unteren Axialposition P/u verstellbar angeordnet. Der Greifer 59 fixiert in der oberen Axialposition P/o den Verschlussstopfen 8 und gibt diesen in der unteren Axialposition P/u frei. Zur Fixierung des Verschlussstopfens 8 weist der Greifer 59 wenigstens ein Greifelement 60 auf, das in der unteren Axialposition unter Ausbildung eines axial wirksamen Formschlusses mit einer Fixierausnehmung 63 des Stopfengehäuses 10 zusammenwirkt. In der unteren Axialposition P/u stehen die Greifelemente 60 bezüglich der Mittellängsachse (61) des Montagerohrs 55 weiter nach innen vor als in der oberen Axialposition P/o. Wird somit der Greifer 59 innerhalb des Montagerohres 55 axial nach unten bewegt, bewegen sich die Greifelemente 60 radial nach innen und erfassen den Verschlussstopfen 8, indem sie ein nach unten weisende Fläche des Verschlussstopfens 8 hintergreifen. Die genannte Fläche wird im vorliegenden Ausführungsbeispiel von der Unterseite der den Verschlussstopfen 8 oberseits abschließenden Wand 23 gebildet. Die radial nach innen gerichtete Bewegung der Greifelemente 60 wird mit Hilfe eines von der Innenwandung des Montagerohrs 55 radial nach innen vorstehenden Vorsprungs 64, der im Ausführungsbeispiel nach Fig. 14 eine sich nach unten verjüngende Konusfläche ist, bewirkt.

Zur axialen Bewegung des Greifers 59 zwischen der oberen und der unteren Axialposition P/o, P/u, ist innerhalb des Montagerohrs 55 oberhalb des Greifers 59 an ein Antrieb 65 beispielsweise in Form eines Hydraulikzylinders angeordnet. Dessen nach unten gerichtete Kolbenstange 66 ist mit dem Greifer 59 verbunden. Dieser umfasst beispielsweise eine kreisrunde Grundplatte 67, an der randständig zwei sich diametral gegenüberliegende, nach unten weg erstreckende Arme 71 angeordnet sind. Deren Freienden bilden die Greifelemente 60, wobei diese auf ihren einander zugewandten Innenseiten eine Mulde 62 aufweisen, um die Greifeigenschaften des Greifers 59 zu verbessern.

Zum Verschluss der Rohröffnung 7 eines Antriebsgehäuserohrs 1 wird das Werkzeug 54, in dessen Aufnahme 57 sich ein Verschlussstopfen 8 befindet, mit Hilfe des oben genannten Mastes in den Innenraum des Reaktordruckbehälters abgesenkt. Der Verschlussstopfen 8 ist mit Hilfe des Greifers 59, der sich in seiner unteren Axialposition P/u befindet relativ zum Montagerohr axial gehalten. Die Drehbetätigungselemente 50 ragen jeweils in ein schlitzförmiges Koppelelement 58 hinein. Der Verschlussstopfen 8 befindet sich dabei gegenüber dem Koppelelement 58 in einer Drehposition, bei der sich das ringförmige Verriegelungselement 14 in seiner Freigabestellung befindet.

Der Verschlussstopfen kann somit mit seinen Ausnehmungen 38 auf die sich axial erstreckenden Rippen 46 des Antriebsgehäuses 1 aufgeschoben werden. Dabei wird das Dichtelement 13 mit seiner Dichtfläche 15 unter axialer Kompression der Feder 26 gegen die Gegenfläche 16 am Antriebsgehäuserohr 1 gedrückt. Die Endposition dieser Aufschiebebewegung ist dann erreicht, wenn das Stopfengehäuse 10 mit seiner unteren Stirnseite an einer radial nach außen vorstehenden Schulter 68 des Antriebsgehäuses 1 anstößt. Das Montagerohr 55 wird dann um seine Mittellängsachse 61 gedreht und dadurch das Verriegelungselement 14 in seine Verriegelungsstellung gelangt. Die Ringsegmente 35 hintergreifen dann mit ihren Anschlagflächen 33 die Gegenflächen 34 der Rippen 46, also deren unteren Stirnseiten. Als nächster Schritt wird der Greifer mit Hilfe des Antriebs 65 in seine obere Axialposition P/o bewegt und das Werkzeug 54 mit Hilfe des Mastes angehoben.

Eine Demontage des Verschlussstopfens 8 ist auf ebenso einfache Weise durchführbar, wenn die geschilderten Maßnahmen zum Verschluss des Antriebsgehäuserohrs 1 in umgekehrter Reihenfolge durchgeführt werden.

Das Stopfengehäuse 10 ist zur Vereinfachung der Montage des Verschlussstopfenes 8 in zwei Teilgehäuse 10a, 10b unterteilt, wobei deren Trennfuge 69 in Richtung der Mittellängsachse 17 verläuft. Die Teilgehäuse sind als Gleichteile ausgestaltet. An ihrer im Montagezustand aneinander liegenden Montagefläche (70) sind Verbindungselemente beispielsweise in Form einer vorstehenden Lasche 73 und einer dazu komplementär ausgestalteten Vertiefung 74 an dem jeweils anderen Teilgehäuse 10a, 10b.

## Patentansprüche

1. Vorrichtung zum Verschließen einer nach oben offenen Rohröffnung (7) eines den Steuerstabantrieb eines Siedewasserreaktors aufnehmenden Antriebsgehäuserohrs (1), umfassend einen Verschlussstopfen (8) mit einem nach unten offenen Stopfengehäuse (10), mit einem axial beweglich innerhalb des Stopfengehäuse geführten Dichtelement (13), das eine zur dichtenden Anlage an eine ringförmige, die Rohröffnung (7) umgrenzenden Gegenfläche (16) dienende Dichtfläche (15) aufweist, mit einem zur Fixierung des Stopfengehäuses (10) am Antriebsgehäuserohr (1) dienenden Verriegelungselement (14), und mit einer Feder (26), welche sich mit ihrem oberen Ende an dem Stopfengehäuse und mit ihrem unteren Ende am Dichtelement abstützt und dieses in einer unteren Endlage hält, wobei das Verriegelungselement (14) drehbar bezüglich der Mittellängsachse (17) des Verschlussstopfens (8) zwischen einer Verriegelungsstellung, in der es axial wirksam am Antriebsgehäuserohr (1) fixierbar ist, und einer Freigabestellung, in der die Axialfixierung aufgehoben ist, an dem Stopfengehäuse (10) gelagert ist.

2. Vorrichtung nach Anspruch 1, wobei das Verriegelungselement (14) bezüglich der Mittellängsachse (17) wenigstens eine radial nach innen vorstehende und nach oben weisende Anschlagfläche (33) zum Hintergreifen einer nach unten weisenden Gegenfläche (34) am Antriebsgehäuserohr (1) aufweist.

3. Vorrichtung nach Anspruch 2, wobei mehrere in Umfangsrichtung des Stopfengehäuses (10) verteilte Anschlagflächen (33) am Verriegelungselement (14) vorhanden sind.

4. Vorrichtung nach Anspruch 3, wobei das Verriegelungselement (14) ein Ring ist und die Anschlagflächen (33) an radial nach innen vorstehenden Ringsegmenten (35)angeordnet sind, wobei zwei in Umfangsrichtung benachbarte Ringsegmente (35) eine Ausnehmung (36) zwischen sich einschließen.

5. Vorrichtung einem der vorhergehenden Ansprüche, wobei das Verriegelungselement (14) wenigstens ein mit einem Überstand (49) aus dem Außenumfang des Stopfengehäuses (10) vorstehendes Drehbetätigungselement (50) aufweist.

6. Vorrichtung nach Anspruch 5, wobei das Drehbetätigungselement (50) ein sich in Umfangsrichtung des Verschlussstopfens (8) erstreckendes Langloch (53) in einer sich koaxial zur Mittellängsachse (17) erstreckenden Seitenwand (29) des Stopfengehäuses (10) durchgreift.

7. Vorrichtung nach einem der vorhergehenden Ansprüche, wobei das Stopfengehäuse (10) in mehrere Teilgehäuse (10, 10b) untergliedert ist, deren Trennfuge (69) in Richtung der Mittellängsachse (17) verläuft.

8. Vorrichtung nach einem der vorhergehenden Ansprüche, wobei das Stopfengehäuse (10) eine kreisrunde Umrissform aufweist.

9. Vorrichtung nach einem der vorhergehenden Ansprüche, wobei am Stopfengehäuse (10) wenigstens eine Fixierausnehmung (63) zum Greifen des Verschlussstopfens (8) mit Hilfe eines Greifers (59) vorhanden ist.

10. Vorrichtung nach Anspruch 9, wobei die wenigstens eine Ausnehmung (63) in die Oberseite einer das Stopfengehäuse (10) nach oben hin abschließenden Wand (23) und in die Seitenwand (29) des Stopfengehäuses (10) mündet.

11. Vorrichtung nach einem der Ansprüche 5 bis10, umfassend ein Werkzeug (54) zur Handhabung des Verschlussstopfens (8), mit einem eine untere Öffnung aufweisenden Montagerohr (55), wobei ein sich an die untere Öffnung (56) anschließender Rohrabschnitt eine Aufnahme (57) für den Verschlussstopfen (8) bildet und ein Koppelelement (58), wobei das Koppelelement zur Drehbewegung des Verriegelungselements (14) mit dessen wenigstens einem Drehbetätigungselement (50) zusammenwirkt.

12. Vorrichtung nach Anspruch 11 in Verbindung mit Anspruch 5, wobei das Koppelelement (58) eine in der Innenwandung des Montagerohrs (55) vorhandene, in dessen untere Stirnseite ausmündende Ausnehmung ist, in die das Drehbetätigungselement (50) des Verschlussstopfens (14) eingreift.

13. Vorrichtung nach Anspruch 12, wobei das Koppelelement (58) ein sich in Längsrichtung des Montagerohrs (55) erstreckender Schlitz ist.

14. Vorrichtung nach einem der Ansprüche 11 bis 13, wobei innerhalb des Montagerohrs (55) an einer oberhalb des wenigstens einen Koppelelements (58) ein Greifer (59) zur axialen Fixierung des Verschlussstopfens (8) vorhanden ist, welcher zwischen einer oberen und einer unteren Axialposition verfahrbar ist, wobei er in der unteren Axialposition (P/u) den Verschlussstopfen (8) axial fixiert und in der oberen Axialposition (P/0)den Verschlussstopfen (8) freigibt.

15. Vorrichtung nach Anspruch 14 in Verbindung mit Anspruch 10 oder 11, wobei der Greifer (59) wenigstens ein Greifelement (60) aufweist, das in der unteren Axialposition unter Ausbildung eines axial wirksamen Formschlusses in die wenigstens eine Fixierausnehmung (63) des Stopfengehäuses (10) eingreift.

16. Vorrichtung nach Anspruch 15, wobei der Greifer (59) wenigstens ein axial nach unten abstehende flexibles Greifelement (60) umfasst, wobei dieses bezüglich der Mittellängsachse (61) des Montagerohrs (55) in der oberen Axialposition (P/o) radial weiter außen angeordnet ist als in der unteren Axialposition (P/u).

17. Vorrichtung nach Anspruch 16, wobei das Greifelement (60) in der unteren Axialposition (P/u) an einem von der Innenwandung des Montagerohrs (55) vorstehenden Vorsprung (64) anliegt.

## Claims

1. Device for sealing a tube opening (7), which is open at the top, of a drive housing tube (1) receiving the control rod drive of a boiling water reactor, comprising a sealing plug (8) having a plug housing (10), which is open at the bottom, having a sealing element (13) guided within the plug housing in an axially moveable manner, said sealing element having a sealing surface (15) serving for sealing contact with a ring-shaped counter surface (16) which encloses the tube opening (7), having a locking element (14) which serves to fix the plug housing (10) to the drive housing tube (1), and having a spring (26) which is supported with its upper end on the plug housing and with its lower end on the sealing element and holds this in a lower end position, wherein the locking element (14) is mounted on the plug housing (10) rotatably with respect to the central longitudinal axis (17) of the sealing plug (8) between a locked position, in which it is able to be fixed axially on the drive housing tube (1), and a release position, in which axial fixing is lifted.

2. Device according to claim 1, wherein
the locking element (14) has at least one stop surface (33) protruding radially inwards and facing upwards with respect to the central longitudinal axis (17) for engaging behind a counter surface (34) facing downwards on the drive housing tube (1).

3. Device according to claim 2, wherein
several stop surfaces (33), which are distributed in the peripheral direction of the plug housing (10), are present on the locking element (14).

4. Device according to claim 3, wherein
the locking element (14) is a ring and the stop surfaces (33) are arranged on ring segments (35) protruding radially inwards, wherein two ring segments (35) which are adjacent in the peripheral direction enclose a recess (36) between them.

5. Device according to one of the preceding claims, wherein
the locking element (14) has at least one rotary actuating element (50) protruding from the outer periphery of the plug housing (10) with an overhang (49).

6. Device according to claim 5, wherein
the rotary actuating element (50) penetrates an elongated hole (53) in a side wall (29) of the plug housing (10) which extends coaxially to the central longitudinal axis (17), said elongated hole extending in the peripheral direction of the sealing plug (8).

7. Device according to one of the preceding claims, wherein
the plug housing (10) is subdivided into several sub-housings (10, 10b), the parting line (69) of which running in the direction of the central longitudinal axis (17).

8. Device according to one of the preceding claims, wherein
the plug housing (10) has a circular contour.

9. Device according to one of the preceding claims, wherein
at least one fixing recess (63) for gripping the sealing plug (8) with the aid of a gripper (59) is present on the plug housing (10).

10. Device according to claim 9, wherein
the at least one recess (63) opens out into the upper side of a wall (23) closing the plug housing (10) towards the top and into the side wall (29) of the plug housing (10).

11. Device according to one of claims 5 to 10,
comprising a tool (54) for handling the sealing plug (8), with a mounting tube (55) having a lower opening, wherein a tube section connecting to the lower opening (56) forms a receiver (57) for the sealing plug (8) and a coupling element (58), wherein the coupling element interacts with its at least one rotary actuating element (50) for rotation of the locking element (14).

12. Device according to claim 11 in connection with claim 5, wherein
the coupling element (58) is a recess which is present in the inner wall of the mounting tube (55) and which opens out in the lower front side thereof, with which recess the rotary actuating element (50) of the sealing plug (14) engages.

13. Device according to claim 12, wherein
the coupling element (58) is a slit extending in the longitudinal direction of the mounting tube (55).

14. Device according to one of claims 11 to 13, wherein
a gripper (59) is present within the mounting tube (55) above the at least one coupling element (58) to axially fix the sealing plug (8), which is able to be moved between an upper and a lower axial position, wherein it axially fixes the sealing plug (8) in the lower axial position (P/u) and releases the sealing plug (8) in the upper axial position (P/0).

15. Device according to claim 14 in connection with claim 10 or 11, wherein
the gripper (59) has at least one gripping element (60) which engages with the at least one fixing recess (63) of the plug housing (10) in the lower axial position to form an axially effective positive connection.

16. Device according to claim 15, wherein
the gripper (59) comprises at least one flexible gripping element (60) projecting axially downwards, wherein this is arranged to be radially further out in the upper axial position (P/o) than in the lower axial position (P/u) with respect to the central longitudinal axis (61) of the mounting tube (55).

17. Device according to claim 16, wherein
in the lower axial position (P/u), the gripping element (60) abuts on a protrusion (64) protruding from the inner wall of the mounting tube (55).

## Revendications

1. Dispositif pour l'obturation de l'ouverture (7) d'un tube de carter de commande (1), ouvert vers le haut, accueillant le mécanisme de commande d'un réacteur à eau bouillante, comprenant un bouchon (8) doté d'un carter de bouchon (10) ouvert vers le bas, d'un élément d'étanchéité (13) mobile axialement et guidé à l'intérieur du carter de bouchon, qui comporte une surface d'étanchéité (15) servant à une application étanche sur une surface antagoniste annulaire (16) entourant l'ouverture du tube (7), d'un élément de verrouillage (14) servant à l'immobilisation du carter de bouchon (10) sur le tube de carter de commande (1) et d'un ressort (26) dont l'extrémité supérieure s'appuie sur le carter de bouchon, et l'extrémité inférieure s'appuie sur l'élément d'étanchéité et maintient ce dernier dans une position finale inférieure, l'élément de verrouillage (14) étant positionné sur le carter de bouchon (10) de façon à pouvoir tourner par rapport à l'axe longitudinal médian (17) du bouchon (8) entre une position verrouillée, dans laquelle il peut être immobilisé de façon axialement opérationnelle sur le tube de carter de commande (1), et une position débloquée dans laquelle l'immobilisation axiale est levée.

2. Dispositif selon la revendication 1, dans lequel l'élément de verrouillage (14) présente, par rapport à l'axe longitudinal médian (17), au moins une surface de butée (33) radialement en saillie vers l'intérieur et dirigée vers le haut, pour saisir par l'arrière une surface antagoniste (34), dirigée vers le bas, sur le tube de carter de commande (1).

3. Dispositif selon la revendication 2, dans lequel plusieurs surfaces de butée (33) sont réparties sur l'élément de verrouillage (14) dans le sens périphérique du carter de bouchon (10).

4. Dispositif selon la revendication 3, dans lequel l'élément de verrouillage (14) est une bague et les surfaces de butée (33) sont disposées sur des segments annulaires (35) radialement en saillie vers l'intérieur, deux segments annulaires (35) voisins dans le sens périphérique délimitant un évidement (36).

5. Dispositif selon l'une quelconque des revendications précédentes, dans lequel l'élément de verrouillage 14 présente au moins un élément d'actionnement rotatif (50) dépassant, avec une saillie (49), de la circonférence extérieure du carter de bouchon (10).

6. Dispositif selon la revendication 5, dans lequel l'élément d'actionnement rotatif (50) traverse un trou oblong (53) s'étendant dans le sens périphérique du bouchon (8) dans une paroi latérale (29) du carter de bouchon (10) s'étendant coaxialement à l'axe longitudinal médian (17).

7. Dispositif selon l'une quelconque des revendications précédentes, dans lequel le carter de bouchon (10) est divisé en plusieurs parties de carter (10a, 10b) dont le joint de séparation (69) est dirigé dans le sens de l'axe longitudinal médian (17).

8. Dispositif selon l'une quelconque des revendications précédentes, dans lequel le carter de bouchon (10) a un contour de forme circulaire.

9. Dispositif selon l'une quelconque des revendications précédentes, dans lequel au moins un évidement d'immobilisation (63) se trouve sur le carter de bouchon (10) pour saisir le bouchon (8) à l'aide d'un préhenseur (59).

10. Dispositif selon la revendication 9, dans lequel l'au moins un évidement (63) débouche dans le dessus d'une paroi (23) fermant le carter de bouchon (10) vers le haut et dans la paroi latérale (29) du carter de bouchon (10).

11. Dispositif selon l'une quelconque des revendications 5 à 10, comprenant un outil (54) destiné à manipuler le bouchon (8), avec un tube de montage (55) doté d'une ouverture inférieure, un tronçon de tube adjacent vers le haut à l'ouverture inférieure (56) formant un logement (57) pour le bouchon (8) et un élément de couplage (58) coopérant avec au moins un élément d'actionnement rotatif (50) de l'élément de verrouillage (14) pour le mouvement rotatif de ce dernier.

12. Dispositif selon la revendication 11 en liaison avec la revendication 5, dans lequel l'élément de couplage (58) est un évidement présent dans la paroi intérieure du tube de montage (55) et débouchant dans la face avant inférieure de celui-ci, évidement dans lequel est inséré l'élément d'actionnement rotatif (50) du bouchon (14).

13. Dispositif selon la revendication 12, dans lequel l'élément de couplage (58) est une fente qui s'étend dans le sens longitudinal du tube de montage (55).

14. Dispositif selon l'une quelconque des revendications 11 à 13, dans lequel, à l'intérieur du tube de montage (55), sur une --- au-dessus de l'au moins un élément de couplage (58), se trouve un préhenseur (59) destiné à l'immobilisation axiale du bouchon (8), lequel peut être déplacé entre une position axiale supérieure et une position axiale inférieure, alors qu'il immobilise axialement le bouchon (8) dans la position axiale inférieure (P/u) et débloque le bouchon (8) dans la position axiale supérieure (P/o).

15. Dispositif selon la revendication 14, en liaison avec la revendication 10 ou la revendication 11, dans lequel le préhenseur (59) présente au moins un élément de préhension (60) qui, dans la position axiale inférieure, s'insère dans l'au moins un évidement d'immobilisation (63) du carter de bouchon 10, en formant une complémentarité de forme axialement effective.

16. Dispositif selon la revendication 15, dans lequel le préhenseur (59) comprend au moins un élément de préhension (60) flexible radialement en saillie vers le bas, celui-ci étant disposé, par rapport à l'axe longitudinal médian (61) du tube de montage (55), radialement plus à l'extérieur dans la position axiale supérieure (P/o) que dans la position axiale inférieure (P/u).

17. Dispositif selon la revendication 16, dans lequel l'élément de préhension (60) plaque, dans la position axiale inférieure (P/u), contre une saillie (64) dépassant de la paroi intérieure du tube de montage (55).
